# EUROPÄISCHE PATENTSCHRIFT

(11) **EP 2 132 863 B1**
(45) Veröffentlichungstag und Bekanntmachung des Hinweises auf die Patenterteilung: **04.06.2014**
(21) Anmeldenummer: 08716018.0
(22) Anmeldetag: 25.02.2008
(51) Int. Cl.: H02K 21/46, H02K 1/27

(54) **ELEKTROMOTOR**
ELECTRIC MOTOR
MOTEUR ÉLECTRIQUE

(30) Priorität: 28.02.2007 DE 102007010107
(43) Veröffentlichungstag der Anmeldung: 16.12.2009
(73) Patentinhaber: SEW-EURODRIVE GmbH & Co. KG, 76646 Bruchsal (DE)
(72) Erfinder: HUTH, Gerhard, 67653 Kaiserslautern (DE); KIMMICH, Rainer, 76684 Östringen (DE); OSIPOV, Petr, 40880 Ratingen (DE); TOUPS, Timo, 76137 Karlsruhe (DE)
(86) Internationale Anmeldenummer: PCT/EP2008/001473
(87) Internationale Veröffentlichungsnummer: WO 2008/104347

(56) Entgegenhaltungen:
- EP-A- 1 519 471
- GB-A- 1 177 247
- JP-A- 2001 037 119
- US-A1- 2005 253 474

## Beschreibung

Die Erfindung betrifft einen Elektromotor.

Asynchronmotoren mit einen Kurzschlusskäfig umfassendem Rotor sind bekannt. Ebenfalls sind Synchronmotoren bekannt, deren Rotor Permanentmagnete aufweist.

**Aus der** EP 1 519 471 A2 **ist ein Synchronmotor bekannt, dessen Magnete in Umfangsrichtung durch Pollückenstäbe getrennt sind.**

**Aus der** US 2005/0253474 A1 **ist ein Synchron-Induktionsmotor bekannt.**

**Aus der** GB 1 177 247 A **ist eine elektrische Maschine mit Permanentmagneten bekannt.**

**Aus der** JP 2001 037119 A **ist ein ist ein Synchronmotor bekannt.**

Der Erfindung liegt daher die Aufgabe zugrunde, einen am Drehstrom-Versorgungsnetz eigenständig anlaufenden Synchronmotor zu schaffen und weiterzubilden.

Erfindungsgemäß wird die Aufgabe bei dem Elektromotor nach den in Anspruch 1 angegebenen Merkmalen gelöst.

Wichtige Merkmale bei dem Elektromotor nach Anspruch 1 sind, dass dessen Rotor ein Blechpaket umfasst, in das Permanentmagnete eingelassen sind,
wobei das Blechpaket einen Kurzschlusskäfig trägt,
**wobei** die Magnete möglichst nahe an der Rotorwelle positioniert sind bei Berücksichtigung des für hohe Wirkungsgrade notwendigen Magnetvolumens und des für die Drehmomentübertragung zwischen Welle und Magnet notwendigen Mindestabstandes.

Vorteiligerweise sind somit die Drehmomentpendelungen, welche beim Anlassen und beim Außertrittfallen auftreten, verminderbar sind.

Bei einer vorteilhaften Ausgestaltung sind die Magnete möglichst nahe an der Rotorwelle positioniert zur Reduktion von Drehmomentpendelungen beim asynchronen Anlauf und Außertrittfallen des Motors. Von Vorteil ist dabei, dass die Drehmomentpendelungen weitest gehend verminderbar sind.

Wichtige Merkmale der Erfindung bei dem Elektromotor sind, dass dessen Rotorwelle mit einem Blechpaket drehfert zur Drehmomentübertragung verbunden ist,
umfassend einen Kurzschlusskäfig, der Stäbe umfasst, insbesondere die in Umfangsrichtung regelmäßig voneinander beabstandet sind,
**wobei** Magnete im Blechpaket vorgesehen sind, die im Wesentlichen direkt am äußerem Umfang der Rotorwelle angeordnet sind.

Von Vorteil ist dabei, dass die Restwandstärke des Blechpakets, welche zwischen Rotorwelle und Magneten jeweils belassen ist, gerade noch zur Drehmomentübertragung ausreichend ausführbar ist. Dies bedeutet, dass die Magnete sogar direkt mit Berührung an der Welle anordenbar sind, wobei dann das Drehmoment der Magnete teilweise direkt an die Welle und teilweise über das Blechpaket an die Welle übertragbar ist. Es ist aber auch alternativ eine kleine Restwandstärke vorsehbar, damit die Magnete im Blechpaket aufnehmbar sind. In dieser Restwandstärke ist dann eine formschlüssige Verbindung vorsehbar, die das Drehmoment von den Magneten über das Blechpaket auf die Welle übertragbar macht. Hierzu ist eine Verzahnung oder Rändelung beispielhaft auf der Welle vorsehbar, mit welcher die Rotorwelle einpressbar ist in das Blechpaket.

Die Restwandstärke ist in jedem Fall derart bemessen, dass sie noch fertigungstechnisch ohne besonderen Aufwand herstellbar ist.

Durch diese vorgesehene Restwandstärke ist sprödes Material als Magnetmaterial verwendbar, da dieses Material nun in einer Ausnehmung des Blechpakets vollständig gehalten ist.

Wichtige Merkmale der Erfindung bei dem Elektromotor sind, dass dessen Rotorwelle mit einem Blechpaket drehfert zur Drehmomentübertragung verbunden ist,
umfassend einen Kurzschlusskäfig, der Stäbe umfasst, insbesondere die in Umfangsrichtung regelmäßig voneinander beabstandet sind,
**wobei** einige der Stäbe als Pollückenstäbe ausgeführt sind, die sich in radialer Richtung tiefer erstrecken als die anderen Stäbe zur Poltrennung,
wobei die radial innen liegenden Endbereiche der Pollückenstäbe in Umfangsrichtung zwischen Magneten angeordnet sind, also zwischen denjenigen Bereichen der Magnete, welche auf gleichem radialen Abstand angeordnet sind wie die Endbereiche.

Von Vorteil ist dabei, dass auf diese Weise eine kostengünstige und einfach herstellbare Poltrennung erreichbar ist. Insbesondere sind die Stäbe alle zusammen in einem einzigen Herstellschritt herstellbar. Außerdem ist die Poltrennung durch bloße Formgebung der Ausnehmungen in den Einzelblechen des Läuferblechpakets erreichbar.

Bei einer vorteilhaften Ausgestaltung sind die Magnete Dauermagnete, insbesondere Permanentmagnete. Von Vorteil ist dabei, dass hohe Drehmomente oder Kräfte erzeugbar sind

Bei einer vorteilhaften Ausgestaltung weist die Stäbe und Pollückenstäbe mittels Aluminiumdruckgussverfahren oder Kupferdruckgussverfahren gefertigt sind. Von Vorteil ist dabei, dass die Herstellung einfach und schnell sowie kostengünstig ausführbar ist.

Bei einer vorteilhaften Ausgestaltung ist das Blechpaket aus Einzelblechen stanzpaketiert hergestellt. Von Vorteil ist dabei, dass eine einfache Technik anwendbar ist, wobei Ausnehmungen vorsehbar sind, die einerseits formgebend für die Stäbe und Pollückenstäbe sind und andererseits Ausnehmungen zur Aufnahme der Magnete vorsehbar sind.

Bei einer vorteilhaften Ausgestaltung ist der Motor ein selbstanlaufender permanenterregter Synchronmotor, insbesondere LSPM-Motor. Von Vorteil ist dabei, dass bei Einschalten der Drehstromversorgung das Anlaufen durch den Kurschlusskäfig nach dem Asynchronprinzip im Wesentlichen bewirkt ist und nach dem Anlaufen im Wesentlichen ein synchrones Arbeitsprinzip wirksam ist, wobei geringere Verluste als beim asynchronen Prinzip auftreten. Somit wird Energie einsparbar und versorgende Elektronik, wie Umrichter oder dergleichen, verzichtbar.

Bei einer vorteilhaften Ausgestaltung ist der Motor zwei, vier, sechs- oder achtpolig ausgeführt, insbesondere mit einer entsprechenden Anzahl von in Umfangsrichtung in Reihe angeordneten Magneten, deren Magnetisierungsorientierung jeweils abwechselt. Von Vorteil ist dabei, dass die Poltrennung hierbei besonders wirksam ausführbar ist.

Bei einer vorteilhaften Ausgestaltung ist zumindest ein Magnet zweistückig oder mehrstückig ausgeführt. Von Vorteil ist dabei, dass der von den Magneten überdeckte radiale Bereich klein haltbar ist.

Bei der Erfindung weisen Ausnehmungen in den Einzelblechen des Blechpakets zur Aufnahme von Magneten Einbuchtungen auf, die derart ausgeführt sind, dass sie nach Einführen der Magnete, insbesondere in axialer Richtung, derart verformbar sind, dass mittels der Verformung und Haftreibung Haltekraft zum kraftschlüssigen Halten der Magnete erzeugbar ist. Von Vorteil ist dabei, dass Haltemittel zum Halten der Magnete durch bloßes Ausformen der Ausnehmungen erzeugbar sind.

Bei einer vorteilhaften Ausgestaltung sind die Pollückenstäbe in radialer Richtung nach innen gerichtet pilzkopfförmig ausgeführt. Von Vorteil ist dabei, dass ein besonders großer Abstand in Umfangsrichtung zwischen den Magneten erreichbar ist.

Bei der Erfindung wächst die in Umfangsrichtung bestimmte Breite der Pollückenstäbe von radial innen nach radial außen in einem radialen Bereich monoton, insbesondere wobei der besagte radiale Bereich, in dem die besagte Breite der Pollückenstäbe monoton wächst, radial weiter innen liegt als derjenige radiale Bereich, über den sich die anderen Stäbe erstrecken. Von Vorteil ist dabei, dass die Magnete in Umfangsrichtung lang ausführbar sind und somit hohe Magnetkräfte erzielbar sind.

Bei einer vorteilhaften Ausgestaltung ist die Anzahl N der Stäbe einschließlich der Pollückenstäbe ganzzahlig durch die Polzahl 2p teilbar ist, also N / 2p eine ganze Zahl. Von Vorteil ist dabei, dass die Poltrennung besonders einfach und wirksam erreichbar ist.

Bei der Erfindung ist in Umfangsrichtung zwischen dem jeweiligen Pollückenstab und dem angrenzenden Magneten eine Restwandstärke vorgesehen, die kleiner ist als die Breite des Pollückenstabs in diesem radialen Bereich, insbesondere kleiner als 3 mm, insbesondere kleiner als 1 mm. Von Vorteil ist dabei, dass die Restwandstärke möglichst klein wählbar ist, wodurch die Poltrennung verbessert ist. Die Restwandstärke ist vorzugsweise derart klein gewählt, dass sie gerade noch im zulässigen Bereich liegt, der durch das Fertigen, insbesondere Ausstanzen, und/oder durch die durch- und/oder abzuleitendenden mechanischen Kraftströme vorzusehen ist. Es werden also gerade noch die erforderlichen Kräfte übertragbar.

Bei einer vorteilhaften Ausgestaltung erfolgt stirnseitig am Blechpaket Verguss mit Aluminium. Von Vorteil ist dabei, dass in einfacher Weise eine axiale Sicherung der Magnete erreichbar ist.

Bei einer vorteilhaften Ausgestaltung sind die Magnete aus NdFeB gefertigt. Von Vorteil ist dabei, dass für den Motor hohe Kräfte erzielbar sind, die auch dauerhaft vorsehbar sind.

Bei einer vorteilhaften Ausgestaltung sind Stäbe und Pollückenstäbe aus gleichem Material ausgeführt. Insbesondere sind Stäbe und Pollückenstäbe im gleichen Herstellungsschritt hergestellt, insbesondere werden sie beim Druckgießen gleichzeitig eingefüllt. Von Vorteil ist dabei, dass der Aufwand zum Herstellen gering ist und trotzdem eine wirksame Poltrennung erreichbar ist.

Die Erfindung wird nun anhand von Abbildungen näher erläutert:

Der erfindungsgemäße Elektromotor umfasst einen Drehstromständer in bekannter Weise. Der Stator weist also eine bekannte Drehstromständerwicklung auf.

Der Rotor hingegen umfasst ein Läuferblechpaket, das einen Kurzschlusskäfig und Permanentmagnete trägt. Bei der Fertigung werden zunächst die Bleche stanzpaketiert verbunden zur Bildung des Läuferblechpakets. Danach wird der Kurzschlusskäfig in Aluminium-Druckguss ausgeführt, also Aluminium in Ausnehmungen des Läuferblechblechpakets eingespritzt. In einem weiteren Schritt werden dann die Permanentmagnete in axialer Richtung eingeschoben.

Der Motor ist n-polig ausführbar, wobei n eine ganze gerade Zahl ist. Vorzugsweise ist der Motor 2- oder 4- oder 6 - polig ausgeführt. Dabei ist also n=2p.

Bei n-poliger Ausführung umfasst der Rotor in Umfangsrichtung n Abschnitte, wobei die magnetische Orientierung der Magnete benachbarter Abschnitte abwechselt. In einem ersten Abschnitt ist beispielsweise der Magnet oder die zusammengehörenden Magnetteile in radialer Richtung derart ausgerichtet, dass der Nordpol nach außen und der Südpol nach innen orientiert ist. Im nächsten Abschnitt ist die Orientierung umgekehrt.

Vorzugsweise sind die Abschnitte getrennt mittels Pollückenstäben des Kurzschlusskäfigs. Zwischen den Pollückenstäben und den Magneten sind Bereiche des Blechpakets vorhanden. Vorzugsweise werden diese Bereiche möglichst schmal in Umfangsrichtung ausgeführt.

Die Magnete sind auf einem Durchmesserbereich angeordnet, der möglichst klein ist. Je näher die Magnete an der mit dem Läuferblechpaket verbundenen Rotorwelle angeordnet sind, desto weniger Drehmomentpendelungen beim Anlauf und Außertrittkommen treten auf. Allerdings muss die Restwandstärke noch derart dick ausgeführt werden, dass die auftretenden Kräfte übertragbar sind.

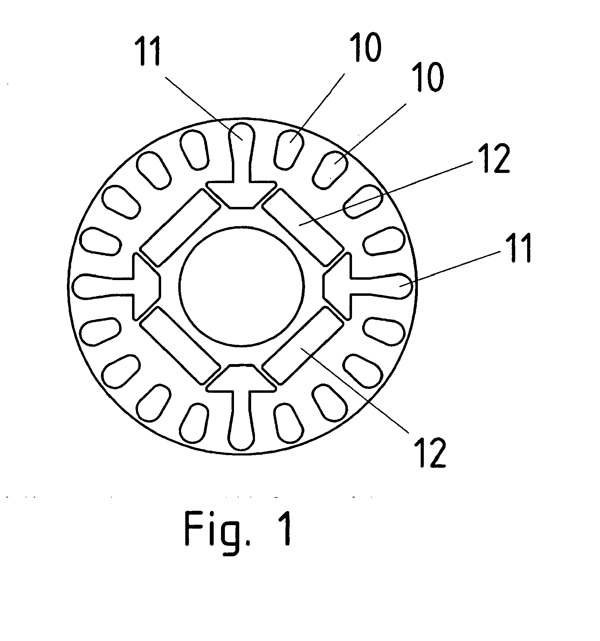

In den Figuren 1, 2 und 3 sind Schnittansichten verschiedener Bleche für das Läuferblechpaket verschiedener Ausführungsbeispiele gezeigt.

Das Blech weist Ausnehmungen 10 für Stäbe des Kurzschlusskäfigs auf, wobei in Umfangsrichtung jede fünfte Ausnehmung 10 als Ausnehmung für einen Pollückenstab 11 ausgebildet ist, also sich weiter in radialer Richtung nach innen erstreckt als die anderen Stäbe. Dabei ist der in Figur 1 zugehörige Schnitt der Ausnehmung 10 nach innen gerichtet pitzkopfförmig ausgeführt, also in einem radial weiter innen liegenden Bereich aufgeweitet in Umfangsrichtung. Dieser aufgeweitete Kopfbereich des Pilzes ist zwischen jeweils zwei in Umfangsrichtung benachbarten, abwechselnd magnetisierten Magneten angeordnet, die bei der Herstellung in die Ausnehmung 12 in axialer Richtung eingeschoben werden. Die Ausnehmung 12 für Magnete sind vorzugsweise quaderförmig ausgeführt.

Die Normale einer ersten Seitenfläche des Quaders ist in axialer Richtung orientiert, die Normale einer zweiten Seitenfläche ist radialer Richtung orientiert. In Umfangsrichtung sind vier Magnete angeordnet.

Zwischen der Ausnehmung 11 und der Ausnehmung 12 sind schmale Blechbereiche belassen, die Streufelder führen. Die Ausnehmungen 11 werden zwar bei der Herstellung mit Aluminium befüllt, führen aber somit die Magnetfeldlinien nur unwesentlich anders als Luft.

Der breit ausgeführte Pilzkopf ermöglicht eine im Wesentlichen konstante Restwandstärke des Blechpakets zwischen Pollückenstab 11 und jeweiligem benachbartem Magnet. Dies vermindert somit den Streufluss innerhalb des Rotors. Ein größerer Anteil des Flusses ist also über den Stator geschlossen.

Die Pollückenstäbe erstrecken sich in radialer Richtung so tief nach innen bis in den radialen Bereich der Magnete. Der maximale Radius, der von den Magneten besetzt ist, ist also größer als der minimale Radius, der von den Pollückenstäben besetzt ist.

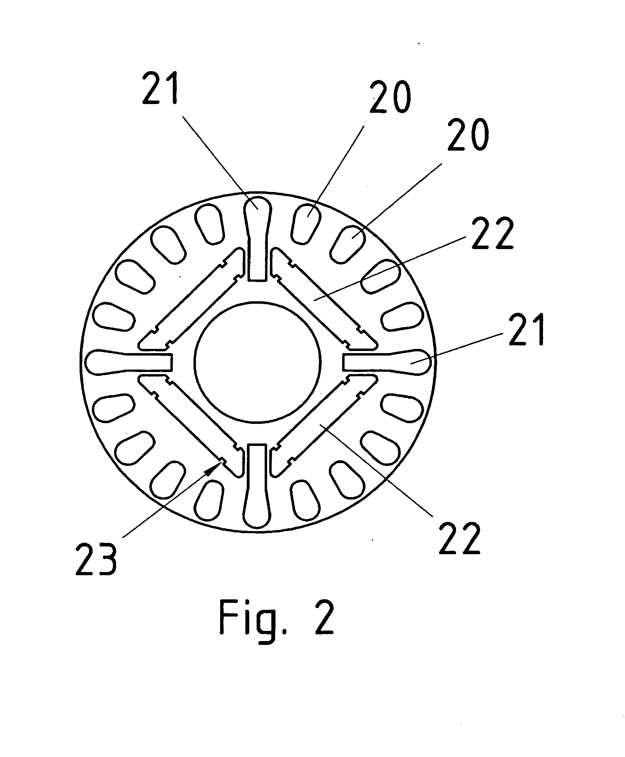

In Figur 2 sind wiederum in Umfangsrichtung jede fünfte Ausnehmung 20 für Stäbe des Kurzschlusskäfigs ersetzt durch Ausnehmung 21 für Pollückenstab. Auch hier erstreckt sich der Pollückenstab wiederum in radialer Richtung so tief, dass der tiefste Radiuswert des Pollückenstabs tiefer als der höchste Radiuswert eines Punktes der Ausnehmung 22 ist und höher ist als der tiefste Radiuswert eines Punktes der Ausnehmung 22.

Die Ausnehmungen 22 weisen Einbuchtungen 23 auf, die beim Einschieben der Magnete in axialer Richtung verformbar sind und somit die Magnete kraftschlüssig halten.

In radialer Richtung nimmt die in Umfangsrichtung gemessene Breite der Ausnehmung 21 monoton ab. Somit sind die Magnete verlängert ausführbar und somit ist eine hohe Magnetkraft erzeugbar. Dabei sind die Magnete mit einem trapezförmigen Querschnitt derart ausführbar, dass sie den für sie vorgesehenen, aus dem Blechpaket ausgestanzten Bereich im Wesentlichen ausfüllen. Alternativ sind auch quaderförmige Magnete einsetzbar, so dass in den Eckbereichen des Trapezes Luft verbleibt, wodurch aber auch der Streufluss gemindert wird und somit die Drehmomentpendelungen vermindert werden.

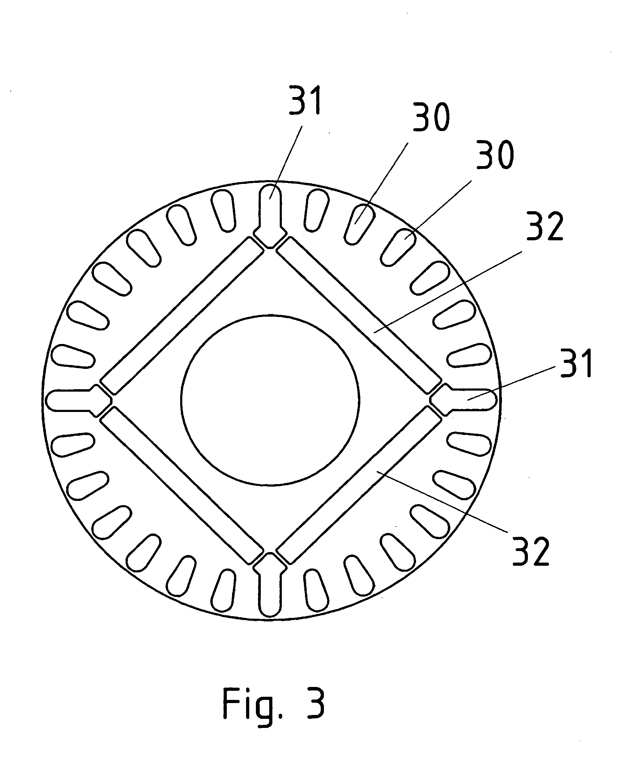

In der Figur 3 ist wiederum ein anderes erfindungsgemäßes Ausführungsbeispiel gezeigt. Dort ist jede siebte Ausnehmung 30 für Stäbe des Kurzschlusskäfigs durch eine Ausnehmung 31 für Pollückenstab ersetzt. Allerdings sind die Ausnehmungen 32 zur Aufnahme der Magnete in axialer Richtung derart radial weit außen vorgesehen, dass die Ecken des gedachten, ungefähr aus den Magneten gebildeten Quadrats nur unwesentlich radial weiter innen liegen als derjenige Kreis, der die radial innen liegenden Endbereiche der Ausnehmungen 30 berührt.

Da die Magnete so weit radial außen vorsehbar sind, sind sie wiederum sehr groß ausgeführt und führen zu einer großen Magnetkraft und somit hohem Wirkungsgrad.

Die Ausnehmungen 31 für Pollückenstäbe sind ähnlich wie in Figur 1 wiederum als nach innen gerichtete Pilzköpfe ausgeführt.

Die Magnete weisen zur innen vorgesehenen Welle einen Abstand auf, der derart bemessen ist, dass die Welle mit einer Außenverzahnung oder Rändelung versehbar ist, mit welcher sie in das Läuferblechpaket einpressbar ist. Dabei ist ein gewisses Übermaß der Verzahnung oder Rändelung derart vorgesehen, dass die auftretenden Kräfte keine störende Verformung des Blechpakets bewirken. Außerdem ist die Restwandstärke zwischen Magnet und Welle derart dick ausgeführt, dass die Übertragung des Motordrehmoments durch diesen Blechbereich hindurch ohne Gefahr von Überlastung oder Bewirkung störender Verformung ermöglicht ist.

Bei weiteren erfindungsgemäßen Ausführungsbeispielen ist statt der geschilderten formschlüssigen Pressverbindung eine Klebeverbindung gewählt. Alternativ ist auch das Drehmoment durch eine formschlüssige Verbindung an den axialen Enden des Läuferblechpakets übertragbar. Bei diesen Ausführungsbeispielen ist die Restwandstärke zwischen den Magneten und der Welle weiter reduzierbar, also die Magnete noch näher an die Welle heran anordenbar. Auf diese Weise werden weniger Drehmomentpendelungen beim Anlauf und Außertrittkommen des Motors erzielt.

Bei weiteren erfindungsgemäßen Ausführungsbeispielen werden bei der Fertigung die Bleche nicht stanzpaketiert sondern andersartig paketiert zur Bildung des Läuferblechpakets.

Bei weiteren erfindungsgemäßen Ausführungsbeispielen werden die Magnete derart orientiert, dass sie einen Schrägungswinkel aufweisen. Beispielsweise sind die Magnete hierzu als Quader ausgeführt, wobei die Normale einer Seitenfläche in radialer Richtung orientiert ist, die Normale einer zweiten Seitenfläche weist dabei aber einen nicht verschwindenden Winkel auf zur axialen Richtung.

### Bezugszeichenliste

10 Ausnehmung für Stäbe des Kurzschlusskäfigs
11 Ausnehmung für Pollückenstab
12 Ausnehmung für Magnet
20 Ausnehmung für Stäbe des Kurzschlusskäfigs
21 Ausnehmung für Pollückenstab
22 Ausnehmung für Magnet
23 Einbuchtungen
30 Ausnehmung für Stäbe des Kurzschlusskäfigs
31 Ausnehmung für Pollückenstab
32 Ausnehmung für Magnet

## Patentansprüche

1. Elektromotor, dessen Rotorwelle mit einem Blechpaket drehfest zur Drehmomentübertragung verbunden ist,
umfassend einen Kurzschlusskäfig, der Stäbe umfasst, insbesondere die in Umfangsrichtung regelmäßig voneinander beabstandet sind,
**wobei** einige der Stäbe als Pollückenstäbe ausgeführt sind, die sich in radialer Richtung tiefer erstrecken als die anderen Stäbe zur Poltrennung,
wobei die radial innen liegenden Endbereiche der Pollückenstäbe in Umfangsrichtung zwischen Magneten angeordnet sind, **also** zwischen denjenigen Bereichen der Magnete, welche auf gleichem radialen Abstand angeordnet sind wie die Endbereiche,
wobei in Umfangsrichtung zwischen dem jeweiligen Pollückenstab und dem angrenzenden Magneten eine Restwandstärke vorgesehen ist, die kleiner ist als die Breite des Pollückenstabs in diesem radialen Bereich,
**dadurch gekennzeichnet, dass**
**die Restwandstärke zwischen der Rotorwelle und den jeweiligen Magneten derart dünn ausgeführt ist, dass gerade das zu übertragende Drehmoment durch die formschlüssige Verbindung übertragbar ist, wobei ein Sicherheitsfaktor von weniger als 2 berücksichtigt ist,**
**wobei die in Umfangsrichtung bestimmte Breite der Pollückenstäbe von radial innen nach radial außen in einem radialen Bereich monoton wächst, insbesondere wobei der** besagte radiale Bereich, im dem die besagte Breite der Pollückenstäbe monoton wächst, **radial weiter innen liegt als derjenige radiale Bereich, über den sich die anderen Stäbe erstrecken,**
**wobei Ausnehmungen (12) in den Einzelblechen des Blechpakets zur Aufnahme von Magneten Einbuchtungen (23) aufweisen, die derart ausgeführt sind, dass sie nach Einführen der Magnete, insbesondere in axialer Richtung, derart verformbar sind, dass mittels der Verformung und Haftreibung Haltekraft zum kraftschlüssigen Halten der Magnete erzeugt ist.**

2. Elektromotor nach Anspruch 1,
**dadurch gekennzeichnet, dass**
die Restwandstärke derart ausgeführt ist, dass eine formschlüssige Verbindung, insbesondere eine eine Verzahnung und/oder Rändelung umfassende Verbindung, innerhalb der Restwandstärke vorgesehen ist.

3. Elektromotor nach mindestens einem der vorangegangenen Ansprüche,
**dadurch gekennzeichnet, dass**
die Magnete Dauermagnete, insbesondere Permanentmagnete sind.

4. Elektromotor nach mindestens einem der vorangegangenen Ansprüche,
**dadurch gekennzeichnet, dass**
die Stäbe und Pollückenstäbe mittels Aluminiumdruckgussverfahren oder Kupferdruckgussverfahren gefertigt sind.

5. Elektromotor nach mindestens einem der vorangegangenen Ansprüche,
**dadurch gekennzeichnet, dass**
das Blechpaket aus Einzelblechen stanzpaketiert hergestellt ist.

6. Elektromotor nach mindestens einem der vorangegangenen Ansprüche,
**dadurch gekennzeichnet, dass**
der Motor ein selbstanlaufender permanenterregter Synchronmotor ist, insbesondere LSPM-Motor.

7. Elektromotor nach mindestens einem der vorangegangenen Ansprüche,
**dadurch gekennzeichnet, dass**
der Motor zwei, vier, sechs- oder achtpolig ausgeführt ist, insbesondere mit einer entsprechenden Anzahl von in Umfangsrichtung in Reihe angeordneten Magneten, deren Magnetisierungsorientierung jeweils abwechselt.

8. Elektromotor nach mindestens einem der vorangegangenen Ansprüche,
**dadurch gekennzeichnet, dass**
zumindest ein Magnet zweistückig oder mehrstückig ausgeführt ist.

9. Elektromotor nach mindestens einem der vorangegangenen Ansprüche,
**dadurch gekennzeichnet, dass**
die Pollückenstäbe in radialer Richtung nach innen gerichtet pilzkopfförmig ausgeführt sind.

10. Elektromotor nach mindestens einem der vorangegangenen Ansprüche,
**dadurch gekennzeichnet, dass**
die Anzahl N der Stäbe einschließlich der Pollückenstäbe ganzzahlig durch die Polzahl 2p teilbar ist, also N / 2p eine ganze Zahl ist,

11. Elektromotor nach mindestens einem der vorangegangenen Ansprüche,
**dadurch gekennzeichnet, dass**
**in Umfangsrichtung zwischen dem jeweiligen Pollückenstab und dem angrenzenden Magneten eine Restwandstärke vorgesehen ist, die kleiner ist als** 3 mm, insbesondere kleiner als 1 mm,

12. Elektromotor nach mindestens einem der vorangegangenen Ansprüche,
**dadurch gekennzeichnet, dass**
zur axialen Sicherung der Magnete stirnseitig am Blechpaket Verguss mit Aluminium erfolgt,

13. Elektromotor nach mindestens einem der vorangegangenen Ansprüche,
**dadurch gekennzeichnet, dass**
die Magnete aus NdFeB gefertigt sind,

14. Elektromotor nach mindestens einem der vorangegangenen Ansprüche,
**dadurch gekennzeichnet, dass**
Stäbe und Pollückenstäbe aus gleichem Material ausgeführt sind,

15. Elektromotor nach mindestens einem der vorangegangenen Ansprüche,
**dadurch gekennzeichnet, dass**
Stäbe und Pollückenstäbe im gleichen Herstellungsschritt hergestellt sind, insbesondere beim Druckgießen gleichzeitig eingefüllt werden,

## Claims

1. Electric motor, the rotor shaft of which is connected to a laminated core in a rotationally fixed manner for transmitting torque,
comprising a cage winding which comprises bars, in particular which are regularly spaced from one another in the circumferential direction,
wherein some of the bars are formed as pole-gap bars which extend deeper in the radial direction than the other bars for pole separation,
wherein the radially inner end regions of the pole-gap bars are arranged in the circumferential direction between magnets, i.e. between those regions of the magnets which are arranged at the same radial distance as the end regions,
wherein a residual wall thickness is provided in the circumferential direction between the respective pole-gap bar and the adjacent magnet, which residual wall thickness is less than the width of the pole-gap bar in this radial region,
**characterised in that**
the residual wall thickness between the rotor shaft and the respective magnets is designed to be thin to such an extent that just the torque to be transmitted is transmittable by the form-locking connection, while allowing for a safety factor of less than 2,
wherein the width of the pole-gap bars determined in the circumferential direction increases monotonically from radially inside radially outwards in a radial region, in particular wherein the said radial region in which the said width of the pole-gap bars increases monotonically lies radially further inwards than that radial region over which the other bars extend,
wherein cutouts (12) in the individual laminations of the laminated core for receiving magnets have indentations (23) which are formed in such a manner that, after insertion of the magnets, in particular in the axial direction, the indentations (23) are deformable in such a manner that retention force for force-locking retention of the magnets is produced by means of the deformation and static friction.

2. Electric motor according to Claim 1,
**characterised in that**
the residual wall thickness is formed in such a manner that a form-locking connection, in particular a connection comprising a toothing and/or knurling, is provided within the residual wall thickness.

3. Electric motor according to at least one of the preceding claims,
**characterised in that**
the magnets are permanent magnets, in particular permanent magnets.

4. Electric motor according to at least one of the preceding claims,
**characterised in that**
the bars and pole-gap bars are produced by means of aluminium diecasting processes or copper diecasting processes.

5. Electric motor according to at least one of the preceding claims,
**characterised in that**
the laminated core is produced from individual laminations which are stamped and bundled.

6. Electric motor according to at least one of the preceding claims,
**characterised in that**
the motor is a self-starting permanently-excited synchronous motor, in particular LSPM (Line Start Permanent Magnet) motor.

7. Electric motor according to at least one of the preceding claims,
**characterised in that**
the motor is formed with two, four, six or eight poles, in particular with a corresponding number of magnets arranged in series in the circumferential direction, the magnetising orientation of which alternates in each case.

8. Electric motor according to at least one of the preceding claims,
**characterised in that**
at least one magnet is of two-part or multipart form.

9. Electric motor according to at least one of the preceding claims,
**characterised in that**
the pole-gap bars are formed in the shape of a mushroom head directed radially inwards.

10. Electric motor according to at least one of the preceding claims,
**characterised in that**
the number N of bars including the pole-gap bars is evenly divisible by the pole number 2p, i.e. N/2p is a whole number.

11. Electric motor according to at least one of the preceding claims,
**characterised in that**
a residual wall thickness is provided in the circumferential direction between the respective pole-gap bar and the adjacent magnet, which residual wall thickness is less than 3 mm, in particular less than 1 mm.

12. Electric motor according to at least one of the preceding claims,
**characterised in that**
sealing with aluminium is carried out at the ends of the laminated core in order to axially secure the magnets.

13. Electric motor according to at least one of the preceding claims,
**characterised in that**
the magnets are produced from NdFeB.

14. Electric motor according to at least one of the preceding claims,
**characterised in that**
bars and pole-gap bars are formed from the same material.

15. Electric motor according to at least one of the preceding claims,
**characterised in that**
bars and pole-gap bars are produced in the same production step, in particular in the case of diecasting are simultaneously poured in.

## Revendications

1. Moteur électrique, dont l'arbre de rotor est relié en solidarité de rotation à un empilage de tôles pour la transmission de couple,
comprenant une cage en court-circuit qui comprend des barres qui sont notamment régulièrement espacées les unes des autres en direction périphérique,
sachant que certaines des barres sont conçues comme barres d'espace interpolaire qui s'étendent plus bas en direction radiale que les autres barres, pour la séparation des pôles, sachant que les régions terminales radialement intérieures des barres d'espace interpolaire sont disposées entre des aimants en direction périphérique, donc entre les régions des aimants qui sont disposées à la même distance radiale que les régions terminales,
sachant qu'il est prévu, en direction périphérique entre la barre d'espace interpolaire respective et l'aimant adjacent, une épaisseur de paroi résiduelle qui est plus petite que la largeur de la barre d'espace interpolaire dans cette région radiale,
**caractérisé en ce que** l'épaisseur de paroi résiduelle entre l'arbre de rotor et les aimants respectifs est réalisée d'une minceur telle que le couple à transmettre peut justement être transmis par la liaison positive, en tenant compte d'un facteur de sécurité inférieur à 2, sachant que la largeur, définie en direction périphérique, des barres d'espace interpolaire augmente de façon monotone radialement de l'intérieur vers l'extérieur dans une région radiale, sachant notamment que ladite région radiale, dans laquelle ladite largeur des barres d'espace interpolaire augmente de façon monotone, est située radialement plus à l'intérieur que la région radiale sur laquelle s'étendent les autres barres,
sachant que des évidements (12), prévus dans les tôles individuelles de l'empilage de tôles et destinés à recevoir les aimants, présentent des échancrures (23) qui sont réalisées de telle sorte qu'à la suite de l'introduction des aimants, notamment en direction axiale, elles sont déformables de telle sorte qu'au moyen de la déformation et de l'adhérence, une force de maintien est produite pour maintenir à force les aimants.

2. Moteur électrique selon la revendication 1, **caractérisé en ce que** l'épaisseur de paroi résiduelle est réalisée de telle sorte qu'une liaison positive, en particulier une liaison comprenant un endentement ou un moletage, est prévue à l'intérieur de l'épaisseur de paroi résiduelle.

3. Moteur électrique selon au moins une des revendications précédentes, **caractérisé en ce que** les aimants sont des aimants à aimantation permanente, en particulier des aimants permanents.

4. Moteur électrique selon au moins une des revendications précédentes, **caractérisé en ce que** les barres et les barres d'espace interpolaire sont fabriquées au moyen d'un procédé de moulage d'aluminium sous pression ou d'un procédé de moulage de cuivre sous pression.

5. Moteur électrique selon au moins une des revendications précédentes, **caractérisé en ce que** l'empilage de tôles est fabriqué à partir de tôles individuelles par boutonnage.

6. Moteur électrique selon au moins une des revendications précédentes, **caractérisé en ce que** le moteur est un moteur synchrone à démarrage automatique et excitation permanente, en particulier un moteur LSPM (Line Start Permanent Magnet).

7. Moteur électrique selon au moins une des revendications précédentes, **caractérisé en ce que** le moteur est réalisé à deux, quatre, six ou huit pôles, en particulier avec un nombre correspondant d'aimants disposés en une rangée en direction périphérique et dont l'orientation d'aimantation alterne chaque fois.

8. Moteur électrique selon au moins une des revendications précédentes, **caractérisé en ce qu'**au moins un aimant est réalisé en deux parties ou en plusieurs parties.

9. Moteur électrique selon au moins une des revendications précédentes, **caractérisé en ce que** les barres d'espace interpolaire sont réalisées en forme de chapeau de champignon dirigé vers l'intérieur en direction radiale.

10. Moteur électrique selon au moins une des revendications précédentes, **caractérisé en ce que** le nombre N de barres, y compris les barres d'espace interpolaire, est divisible sans reste par le nombre de pôles 2p, donc N / 2p est un nombre entier.

11. Moteur électrique selon au moins une des revendications précédentes, **caractérisé en ce qu'**une épaisseur de paroi résiduelle qui est inférieure à 3 mm, en particulier inférieure à 1 mm, est prévue en direction périphérique entre la barre d'espace interpolaire respective et l'aimant adjacent.

12. Moteur électrique selon au moins une des revendications précédentes, **caractérisé en ce qu'**un enrobage d'aluminium est effectué du côté frontal sur l'empilage de tôles afin d'assujettir axialement les aimants.

13. Moteur électrique selon au moins une des revendications précédentes, **caractérisé en ce que** les aimants sont fabriqués en NdFeB.

14. Moteur électrique selon au moins une des revendications précédentes, **caractérisé en ce que** les barres et les barres d'espace interpolaire sont réalisées dans le même matériau.

15. Moteur électrique selon au moins une des revendications précédentes, **caractérisé en ce que** les barres et les barres d'espace interpolaire sont fabriquées au cours de la même étape de fabrication, en particulier sont simultanément remplies lors du moulage sous pression.
